# NEUE EUROPÄISCHE PATENTSCHRIFT

(11) **EP 2 554 485 B2**
(45) Veröffentlichungstag und Bekanntmachung des Hinweises auf die Entscheidung über den Einspruch: **29.07.2026**
(45) Hinweis auf die Patenterteilung: 12.08.2015
(21) Anmeldenummer: 11009748.2
(22) Anmeldetag: 09.12.2011
(51) Int. Cl.: B65D 1/24, B29C 45/14

(54) **Flaschenkasten mit Prägefolie**
Bottle crate with embossing foil
Caisse à bouteilles dotée d'une feuille à relief

(30) Priorität: 02.08.2011 DE 102011109108
(43) Veröffentlichungstag der Anmeldung: 06.02.2013
(73) Patentinhaber: Oberland M & V GmbH, 88410 Bad Wurzach (DE)
(72) Erfinder: Götz, Hartmut, 88410 Bad Wurzach (DE)
(74) Vertreter: Simmons & Simmons LLP (Munich)

(56) Entgegenhaltungen:
- EP-A1- 1 008 527
- EP-A1- 1 563 980
- EP-A1- 2 143 647
- EP-B1- 1 364 881
- DE-A1- 1 729 168
- DE-A1- 19 613 494
- DE-A1- 19 844 183
- DE-A1- 2 656 965
- DE-U1- 202005 007 790

## Beschreibung

Die Erfindung betrifft einen Transportbehälter, insbesondere einen Flaschenkasten zur Aufnahme von Getränkeflaschen oder Flaschengebinden nach dem Oberbegriff des Anspruchs 1.

Aus dem Stand der Technik, beispielsweise aus der EP 2 177 440 B1 sind Transportbehälter für Getränkeflaschen bekannt.

Derartige Transportbehälter sind in ihrem alltäglichen Einsatz oftmals erheblichen Belastungen, beispielsweise durch maschinelle Handhabung, aber auch durch umweltbedingte Einflüsse und unter Erfüllung ihrer technischen Funktion als Schutzhülle für die transportierten Gegenstände ausgesetzt.

Die Transportbehälter erfahren dabei oftmals Beschädigungen im Bereich ihrer Außenwandflächen welche das Erscheinungsbild eines entsprechenden Transportbehälters einschneidend prägen.

Die EP 2177 440 B1 schlägt dazu vor, die Außenwandfläche mit Strukturen zu versehen und gleichzeitig Bereiche in die Ebene der Außenwandfläche hineinzuversetzen, welche vor Beschädigungen geschützt sein sollen.

Eine Vielzahl weiterer bekannter Transportbehälter weist an ihren Außenwandoberflächen, ebenso wie der genannte Stand der Technik, Werbeaufdrucke oder eine Überspannung mit Werbefolien auf, die dazu dienen, auf die Herkunft des im Transportbehälter aufgenommenen Gutes hinzuweisen und dem Transportbehälter einen gefälligen Eindruck zu verleihen. Derartige Werbeaufbringungen werden üblicherweise in einem Druckverfahren oder durch Etiketten angebracht.

Nach dem Stand der Technik ist es bekannt, Etiketten herzustellen, welche vor der Herstellung des Transportbehälters in ein Werkzeug, vorzugsweise ein Spritzgusswerkzeug eingelegt werden, und sodann mit der, den Transportbehälter bildenden Kunststoffmasse hinterspritzt und damit mit dieser verbunden werden. Die entstehenden Oberflächen sind dabei eben und tragen den Werbeaufdruck des Etikettenmaterials, wobei insbesondere gehärtete, mehrlagige Etiketten, wie sie beispielsweise die EP 1364881 B1 zeigt, Verwendung finden.

Nachteilig am genannten Stand der Technik ist jedoch, dass die beteiligten Verkehrskreise der Endverbraucher den bekannten und im geschäftlichen Verkehr gegenwärtigen Transportbehältern keinen besonders einprägsamen optischen Gesamteindruck mehr entnehmen, da diese in einer Vielzahl von Ausgestaltungen und Ausführungsformen vorliegen. Dies wirkt sich auch auf die Absatzzahlen der transportierten Waren aus und hat somit erhebliche wirtschaftliche Relevanz. Darüber hinaus sind die beschriebenen Nachteile der oberflächlichen Beschädigungsgefahr und eines dadurch entstehenden wertmindernden Gesamteindrucks gegeben.

Das Dokument EP 1 008 527 A1 beschreibt einen Transportkasten , nach dem Oberbegriff des Anspruchs 1, mit einem nach innen versetzten Wandabschnitt, in welchem ein sogenanntes "Inmould Label" angeordnet ist. Dieses Inmould Label bedeckt wiederum eine erhabene Struktur, wodurch ein besonderer optischer Eindruck entstehen soll.

Das Dokument EP 2 143 647 A1 beschreibt einen Kunststoffkasten, bei welchem über ein Relief auf einer Außenwand ein besonderer optischer Eindruck entstehen soll. Das Relief wird dabei mit einer Inmould-Folie überzogen und durch ein Mehrkomponenten Kunststoff-Spritzverfahren hervorgearbeitet.

Das Dokument EP 1 563 980 A1 beschreibt die Verwendung einer Inmould-Folie auf einem Transportkasten. Hierbei wird die Inmould Folie um eine Ecke herum geführt.

Nachteilig an allen Ausführungen aus dem Stand der Technik ist, dass die Etiketten entweder über einen Mehrkomponenten-Prozess "umspritzt" werden müssen oder über zusätzliche Schutzlacke oder dergleichen beschichtet werden, um sie haltbarer zu machen. Diese Arbeitsschritte sind zusätzlich und verteuern damit das herzustellende Produkt.

Aufgabe der Erfindung ist es daher, einen Transportbehälter, insbesondere einen Flaschenkasten bereit zu stellen, welcher neben den vorteilhaften Eigenschaften zur Vermeidung von oberflächlichen Defekten einen neuen und einprägsamen Gesamteindruck aufweist, durch welchen er sich für die beteiligten Verkehrskreise aus der Vielzahl der bereits vorhandenen Getränkekästen abhebt.

Erfindungsgemäß wird diese Aufgabe durch einen Transportbehälter ausgehend vom Oberbegriff des Anspruchs 1 durch die kennzeichnenden Merkmale des Anspruchs 1 gelöst. Erfindungsgemäße Weiterbildungen sowie zweckmäßige Ausgestaltungen sind in den abhängigen Ansprüchen angegeben.

Des Weiteren wird ein Verfahren zur Herstellung eines Transportbehälters aus Kunststoff beschrieben. Das für die Herstellung des Transportbehälters aus Kunststoff benötigte Werkzeug zur Ausführung des Verfahrens ist ebenfalls angegeben.

Die Erfindung betrifft im Einzelnen einen Transportbehälter, insbesondere einen Flaschenkasten zur Aufnahme von Getränkeflaschen oder Flaschengebinden, wobei der Transportbehälter einen Boden und eine Behälterwand umfasst, die Behälterwand eine Außenwandfläche und eine Innenwandfläche aufweist wobei der Boden und die Innenwandfläche einen Aufnahmeraum des Transportbehälters definieren. Die Außenwandfläche ist zumindest teilweise mit einem Etikett bedeckt.

Der übliche Getränkekasten weist eine ebene Außenwand auf, welche gegebenenfalls eine rillenartige Struktur tragen kann, oder vereinzelt zurückversetzte unstrukturierte Bereiche umfasst. Etikettierte Bereiche sind nicht vorgesehen, sobald die Außenwandfläche eine Strukturierung trägt. Der durch die Innenwandfläche und den Boden begrenzte Aufnahmeraum des Transportbehälters umfasst üblicherweise Stege, Zwischenwände sowie Pinolen, wobei die innenseitige Ausgestaltung des Aufnahmeraums vorliegend keine erhebliche Rolle spielt.

Das erfindungsgemäß die Außenwandfläche zumindest teilweise bedeckende Etikett ist vorliegend in der Erscheinung einer Einprägung in das Material mit seiner Struktur in die Ebene der Außenwandfläche hineinragend ausgebildet, sodass eine Art invertierte Reliefstruktur entsteht. Bei dem üblicherweise vierseitigen Transportbehälter für die Aufnahme von Getränkeflaschen wir die Außenwandfläche durch die vier nacheinander umlaufenden Außenwandflächenabschnitte gebildet, welche den jeweiligen Seiten des Behälters zugeordnet sind. In zweckmäßiger Weise ist jede Seite mit mindestens einem Etikett versehen, wobei die Etiketten insgesamt oder nur teilweise die erfindungsgemäße Einprägung in die Außenwand hinein erfahren. Auch Etiketten, welche um eine Kante herum verlaufen, sind denkbar.

In einer zweckmäßigen Weiterbildung der Erfindung ist vorgesehen, dass die Struktur des Etiketts, welche in die Außenwand hineinragt, Buchstaben und/oder Symbole insbesondere einen Werbeschriftzug umfasst. Die Struktur verstärkt dabei das auf das Etikett aufgedruckte Bild insbesondere entlang seiner Kanten durch die reliefartige Betonung.

Alternativ oder ergänzend hierzu ist ebenfalls vorgesehen, dass die Struktur des Weiteren flächenartige Bestandteile umfasst, welche insbesondere natürlichen und/oder industriellen Oberflächenstrukturen nachempfunden sind. Die sich aus diesen Weiterbildungen ergebenden Vorteile bieten einen erheblichen Gestaltungsfreiraum und lassen einen neuartigen und wohlgefälligen Gesamteindruck des entstehenden Transportbehälters zu.

Unter natürlichen und/oder industriellen Oberflächenstrukturen sind beispielsweise nachempfundene Holz-Maserungsstrukturen, gefällige Stein- oder Granitmuster sowie industriell ansprechend anmutende Strukturen wie beispielsweise Riffelblechoberflächen oder dergleichen zu verstehen.

Ein weiterer Gestaltungseffekt ergibt sich dadurch, dass die Struktur raue Abschnitte und/oder glatte Abschnitte umfasst. Raue Abschnitte, deren Körnung in etwa einem 250er Korn entspricht, stellen matt wirkende Etikettenflächen bereit. Extrem glatte Abschnitte hingegen erzeugen eine Glanzoptik.

Da die etikettierten Abschnitte später im Gebrauch des Transportbehälters erheblichen mechanischen Belastungen ausgesetzt sind, beispielsweise beim Durchlaufen eines Flaschenkastens durch eine Waschstraße, ist eine Bearbeitung der Oberflächen mit aufgebrachtem Etikett zur Mattierung oder zur Glanzpolitur nicht zweckmäßig. Dies würde die Oberflächen zu empfindlich für den industriellen Einsatz machen oder wäre mit zu kostenintensiven Materialien verbunden.

In der Erfindung ist vorgesehen, dass das Etikett insgesamt in die Ebene der Außenwandfläche hineinversetzt ist. Auf diese Weise wird ergänzend zum Prägecharakter der enthaltenen Struktur ein Schutz des Etiketts vor reibenden Oberflächen, beispielsweise beim Transport des Transportbehälters auf Förderbändern gegeben.

Das Etikett besteht aus einer Folie, insbesondere einer PE-, PP- oder PET-Folie (Polyethylenterephthalat) und/oder ist damit überzogen und/oder mit einer Schutzlackschicht überzogen. Derartige Folien oder Schutzlacke helfen, das Etikett gegen Beschädigungen, beispielsweise durch vorbeikratzende Bestandteile einer Transportvorrichtung oder im alltäglichen Gebrauch zu schützen. Im Allgemeinen spricht man von einem sogenannten kaschierten Etikett, bei welchem ein bedruckter Bereich mit einer transparenten Schutzschicht überzogen ist und ggf. noch eine haftvermittelnde Unterseite aufweisen kann. Auch laminierte Etiketten, bei welchen der bedruckte Bereich in eine Art Hülle aufnehmbar ist, sind möglich.

In den meisten Ausführungsformen kommt eine PE- oder PP-Folie zum Einsatz, welche bedruckt wird, um die Etiketteninformationen und Darstellungen zu erhalten und welche anschließend mit einer PET-Klarsichtfolie kaschiert überzogen wird.

In einer weiteren Ausgestaltung der Erfindung ist vorgesehen, dass die Struktur, welche in die Außenwandebene hineinragt, eine Versatzhöhe von maximal 2 mm, insbesondere von maximal 1 mm und vorzugsweise von maximal 0,5 mm aufweist. Bei der Ausbildung zu großer Strukturhöhen besteht das Risiko, dass das Etikett beim Anformen an die auszubildende Struktur reißt, und somit kein gewünschter gefälliger Gesamteindruck mehr entsteht. Es ist darüber hinaus jedoch davon auszugehen, dass die Strukturen eine gewisse Mindesthöhe aufweisen müssen, um dem Verbraucher aufzufallen und die entsprechende Wirkung zur Hervorhebung des Transportbehälters unter der Vielzahl der vorhandenen Transportbehälter zu erzielen. Unabhängig von diesen Strukturen sind Oberflächen zu betrachten, deren Aufgabe die Beeinflussung der optischen Erscheinung im Sinne von matten und glänzenden Oberflächen ist.

Als Mindesthöhe kann vorliegend ein Bereich von 0,05mm bis 0,3mm, insbesondere 0,2mm angestrebt werden, wobei in einzelnen Fällen auch geringere Mindesthöhen oder fließende Übergänge denkbar sind. Durch die Materialparameter ist die durch den Verbraucher wahrnehmbare Mindesthöhe jedoch ggf. in der Größenordnung der Etikettendicke gegeben, welche im Zweifelsfall auch wesentlich geringer sein kann (ca. 0,01 bis 0,05 mm). Sinnvolle Mindesthöhen ergeben sich nach der Wahrnehmung im Gesamteindruck durch den Verbraucher.

In einer weiteren zweckmäßigen Ausgestaltung ist überdies vorgesehen, dass das Etikett eine Shore Härte von mindestens 60 aufweist. Entsprechend harte Etiketten bieten einen überdies verbesserten Widerstand gegenüber Beschädigungen.

In einer weiteren Ausbildung des Transportbehälters ist vorgesehen, dass die Struktur zumindest einen Eckbereich der Behälterwand des Flaschenkastens zumindest teilweise überdeckt bzw. das Etikett darübergehend verläuft. Die reliefartige Struktur auch über einen Eckbereich hinaus auszubilden gibt dem Transportbehälter weitere originelle neue Eigenschaften und stellt überdies eine verbesserte Möglichkeit dar, Informationen oder Werbebotschaften mittels der eingebrachten Struktur deutlich hervorzuheben. Herkömmliche Transportbehälter weisen stets unstrukturierte Eckbereiche auf, da diese meist als Stoßkanten dienen.

Des Weiteren wird ein Verfahren, nicht Teil der Erfindung, zur Herstellung eines Transportbehälters aus Kunststoff, insbesondere eines Getränkekastens offenbart, wobei der Transportbehälter einen Boden und eine Behälterwand umfasst, die Behälterwand eine Außenwandfläche uns eine Innenwandfläche aufweist und der Boden und die Innenwandfläche einen Aufnahmeraum des Transportbehälters definieren und die Ausformung des Transportbehälters im Spritzgussverfahren in einem Werkzeug ausgeführt wird. Dabei wir vor Einbringung des Kunststoffs in das Spritzgusswerkzeug mindestens ein Etikett zur mindestens teilweisen Bedeckung der auszuformenden Außenwandfläche eingelegt, wobei das Etikett während der Ausformung auf der Seite der Außenwandfläche hinterspritzt wird. Das erfindungsgemäße Werkzeug weist dabei in der Ebene der auszuformenden Außenwandfläche Strukturen auf, welche derart in die Außenwandfläche hineinragen, dass eine eingeprägte Struktur entsteht.

In einer bevorzugten Ausführung des Verfahrens kann das Etikett vor dem Einlegen in das Werkzeug temperiert, insbesondere auf eine Temperatur zwischen 35°C und 70°C gebracht werden. Die Temperierung des Etiketts bewirkt, dass eine Anpassung an die Strukturen erheblich erleichtert wird und Rissbildungen oder Überstreckungen vermieden werden. Zweckmäßig haben sich Temperaturen von ca. 50°C ergeben, wobei diese Temperaturen stets abhängig vom verwendeten Etikettenmaterial zu betrachten sind. Es besteht auch die Möglichkeit, die Temperierung innerhalb des Werkzeugs vorzunehmen, indem das Etikett vor dem Hinterspritzen eine gewisse Zeit im Werkzeug vorgehalten wird, und das Werkzeug bereits eine entsprechende Temperatur aufweist. Der Kunststoff des Etiketts wird durch das Temperieren geschmeidiger.

Durch das Temperieren vor dem Einlegen oder im Werkzeug wird erreicht, dass eine Vakuumkante, welche das Etikett im Werkzeug an seiner bestimmten Position halten soll, das Etikett nicht nur auf seiner Kantenlinie ansaugt, sondern dass durch die hinter dem Etikett vorliegende Struktur auch Unterdruck flächig hinter dem Etikett erzeugt wird, bis dieses vorgeformt an der Struktur anliegt. Es kann somit von einem Vorformen des Etiketts im inneren des Spritzgusswerkzeugs vor dem Hinterspritzen mit Kunststoff gesprochen werden.

Weitere Details zum Verfahren sowie zum Werkzeug, sind den folgenden Beschreibungen eines Ausführungsbeispiels zu entnehmen.

Es zeigen
- Figur 1: einen erfindungsgemäßen Transportbehälter in schematischer Darstellung.
- Figur 2: ein schematisches Etikett
- Figur 3: ein Ausschnitt aus einem Spritzgusswerkzeug zur Herstellung eines erfindungsgemäßen Transportbehälters.
- Figur 4: einen Ausschnitt aus einer Werbefläche eines Transportbehälters, nicht Teil der Erfindung, in schematischer Darstellung.
- Figur 5: einen Ausschnitt aus einem Herstellungswerkzeug für eine Darstellung nach Figur 4.
- Figur 6: eine Abbildung eines Transportbehälters, nicht Teil der Erfindung.
- Figur 7: eine Detaildarstellung des Transportbehälters nach Figur 6.
- Figur 8: eine ausschnittsweise Darstellung einer Werkzeugfläche mit Vakuumkante zur Aufnahme eines anzubringenden Etiketts.
- Figur 9: einen erfindungsgemäßen Transportbehälter mit um einen Eckbereich verlaufender Struktur.

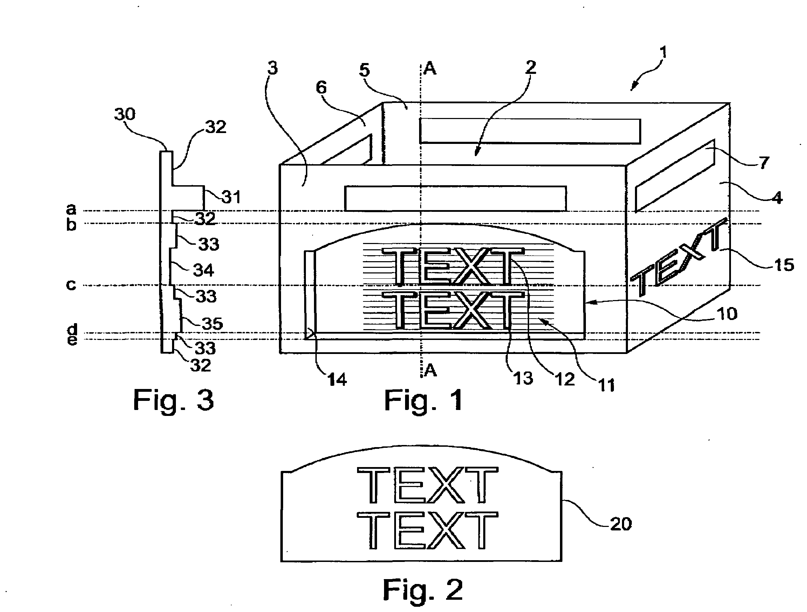

Im Einzelnen zeigt Figur 1 einen erfindungsgemäßen Transportbehälter 1 in Form eines Flaschenkastens, welcher einen Aufnahmeraum 2 für die Aufnahme von Getränkeflaschen oder Flachengebinden (nicht dargestellt) aufweist. Der Aufnahmeraum wird vorliegend durch Wandelemente begrenzt, welche eine Innenwandfläche und eine Außenwandfläche aufweisen. Exemplarisch dargestellt sind vorliegend eine frontale Außenwand 3 sowie eine seitliche Außenwand 4 sowie zwei Innenwandflächen 5 und 6 sichtbar.

Der Transportbehälter 1 weist an seinen Wandflächen Griffmulden 7 auf, welche zur einfachen Handhabung des Transportbehälters dienen.

An der vorderen Außenwand 3 ist in einem Etikettenbereich 10 ein Etikett erfindungsgemäß angebracht, sodass es in die Ebene der Außenwand 3 hineinragt. Das Etikett 20 weist eine Struktur 11, welche vorliegend als Strichstruktur angedeutet ist, auf. Die Struktur kann beispielsweise eine Holzmaserung und/oder die oben beschriebenen Variationen von Mustern darstellen. Des Weiteren weist der Etikettenbereich 10 Textelemente 12, 13 auf. Der Text 12 ist vorliegend beispielsweise als gegenüber der Fläche des Etikettenbereichs 10 wiederum erhabener Text dargestellt, welcher dadurch einen Reliefeindruck vermittelt.

Der Text 13 ist vorliegend gegenüber der Fläche des Etikettenbereichs 10 weiter in die Ebene der Außenwandfläche hineinragend ausgebildet, sodass er eine Einprägung des Textes darstellt. Die gesamte Fläche des Etikettenbereichs 10 ist vorliegend um einen Versatz 14 in die Ebene der Außenwand hinein ausgebildet, wodurch der erfindungsgemäße neue Eindruck entsteht.

An der Außenwand 4 ist wiederum ein Schriftzug 15 vorgesehen, welcher beispielsweise nur als Schriftzug ausgehend von der Außenwandfläche der Außenwand 4 in diese eingeprägt, also nach innen hineinragend versetzt ausgeformt wurde.

Figur 2 zeigt ein Etikett, wie es in einem Etikettenbereich 10 nach Figur 1 angeordnet werden kann.

Figur 3 zeigt, Bezug nehmend auf Figur 1 eine schematische abschnittsweise Darstellung eines nicht erfindungsgemäßen Werkzeugs, wobei das Werkzeug 30 an seiner, die Außenwandfläche ausformenden Oberfläche Vorsprünge sowie Vertiefungen aufweist, welche beim Ausformen des erfindungsgemäßen Transportbehälters die erfindungsgemäße Struktur des Etiketts in der Ebene der Außenwand erzeugen. Die Vorsprünge formen dabei die Außenwandfläche wie folgt:
31 - Griffmulde
32 - Wandebene
33 - Etikettenversatz
34 - Text, erhaben
35 - Text, geprägt

Zur verbesserten Übersicht sind gestrichelt Projektionslinien a, b, c, d, e entlang der Oberfläche des Transportbehälters 1 eingezeichnet.

Die feinen Ausformungen der Struktur 11 sind vorliegend am Werkzeug 30 nicht dargestellt, überlagern jedoch beispielsweise die Bereich des Etikettenversatzes 33 und/oder auch die Bereiche des Textes. Der vorliegende Ausschnitt des Werkzeugs 30 ist entlang der Schnittkante A-A gewählt.

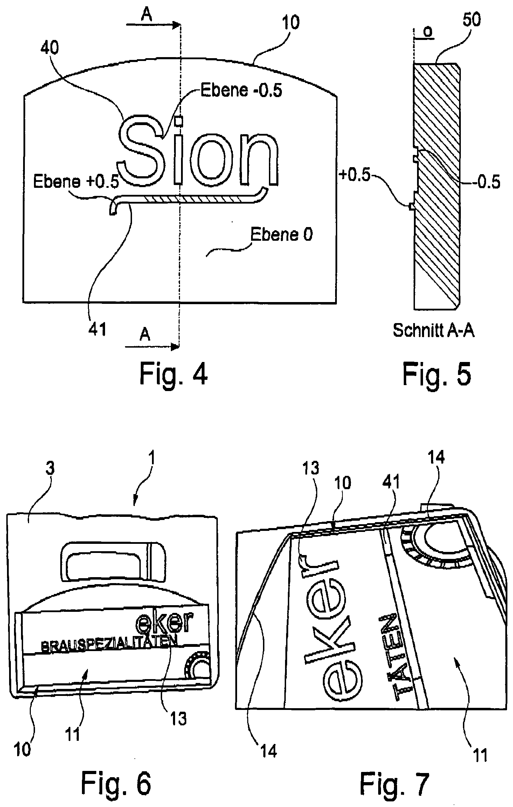

Figur 4 zeigt eine weitere Ausführungsform eines Etikettenbereichs, nicht Teil der Erfindung, wobei vorliegend ein Textbestandteil 40 aus der Ebene um 0,5 mm herausversetzt ist, wo hingegen eine Linienstruktur 41 entsprechende 0,5 mm in die Ebene hineinragt. Das entsprechende Werkzeug, nicht Teil der Erfindung, ist ausschnittsweise entlang der Schnittlinie A-A in Figur 5 dargestellt.

Figur 6 zeigt eine Darstellung eines Transportbehälters, nicht Teil der Erfindung, Figur 7 zeigt eine Detaildarstellung eines Eckbereichs der Figur 6. Figur 6 und 7 sind mit analogen Bezugszeichen entsprechend der Figur 1 gekennzeichnet, um nochmals die Erscheinungsform des ansprechenden und werbewirksamen Transportbehälters herauszustellen.

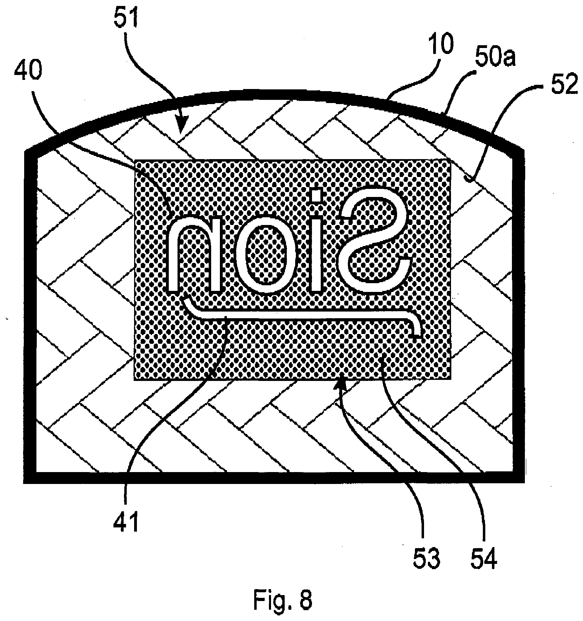

Figur 8 zeigt eine ausschnittsweise Darstellung einer Werkzeugfläche, nicht Teil der Erfindung, mit Vakuumkante 50a zur Aufnahme eines anzubringenden Etiketts. Die Ansicht erfolgt ausgehend vom Innenraum des Werkzeugs. Die Werkzeugfläche zeigt ebenfalls den Textbestandteil 40 sowie die Linienstruktur 41, jedoch aufgrund der Ansicht in Negativdarstellung. Ergänzend zur oben beschriebenen (siehe Fig. 4 & 5) Ausführung, sind vorliegend ein Strukturbereich 51 mit einer Grobstruktur in Form eines Zick-Zack-Musters 52 und ein Strukturbereich 53 mit einer Feinstruktur 54 in form einer mattierenden Rauhigkeit vorgesehen. Die mattierende Rauhigkeit kann beispielsweise einer 250er Körnung mit Strukturgrößen von 10µm bis 80µm entsprechen. Das optische Erscheinungsbild wäre nach entsprechender Hinterspritzung mit Kunststoff dann durch einen glänzenden Schriftzug 40 mit glänzender Linienstruktur 41 auf mattiertem Hintergrund 53 mit umgebendem, eingeprägtem Muster 51 gegeben.

Durch das entlang der Vakuumkante 50a anliegende Vakuum und die Linien bzw. Zwischenräume der Strukturen 51, 53 wird ein eingelegtes Etikett, welches vorzugsweise durch Tempern bereits ausreichend elastisch ist, flächig an das Werkzeug herangesaugt und nimmt bereits zu einem gewissen Maße die Strukturen 40,41,52,54 an. Das Produktionsergebnis wird dadurch im Sinne der Erfindung erheblich verbessert.

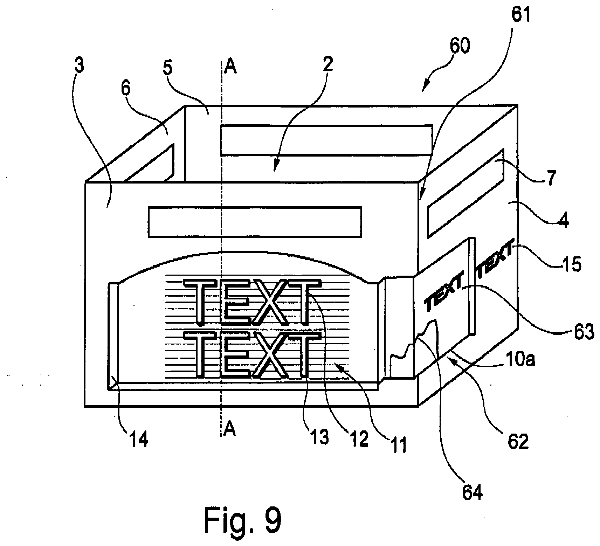

Figur 9 zeigt einen Transportbehälter 60, welcher im Wesentlichen der Darstellung der Fig. 1 entspricht. Gleiche Bestandteile sind mit gleichen Bezugszeichen versehen. Der Transportbehälter 60 weist jedoch in einem Eckbereich 61 einen erfindungsgemäß versetzten Bereich 62 auf. Der versetzte Bereich 62 erstreckt sich dabei im Ausführungsbeispiel vom Etikettenbereich 10 über einen Etikettenbereich 10a und erlaubt, eine Struktur in Form von Text 63 oder einer Bildstruktur 64 über den Eckbereich 61 darzustellen. Der Text 63 oder die Bildstruktur 64 können dabei vertieft oder erhaben ausgebildet sein. Auch eine Anbringung mehrerer mit Strukturen versehener Eckbereiche oder einer Unterbrechung des Etikettenbereichs 10a im Verlauf eines Eckbereichs 61 ist denkbar.

### Bezugszeichenliste:

- 1: Transportbehälter
- 2: Aufnahmeraum
- 3: Außenwand
- 4: Außenwand
- 5: Innenwand
- 6: Innenwand
- 7: Griffmulde
- 10: Etikettenbereich
- 10a: Etikettenbereich
- 11: Struktur
- 12: Text - erhaben
- 13: Text - geprägt
- 14: Versatz
- 15: Schriftzug - geprägt
- 20: Etikett
- 30: Werkzeug (Ausschnitt)
- 31: Griffbereicht
- 32: Wandebene
- 33: Etikettenversatz
- 34: Text - erhaben
- 35: Text - geprägt
- 40: Schriftzug - erhaben
- 41: Linie - geprägt
- 50: Werkzeug
- 50a: Vakuumkante
- 51: Strukturbereich
- 52: Zick-Zack-Musters
- 53: Strukturbereich
- 54: Feinstruktur
- 60: Transportbehälter
- 61: Eckbereich
- 62: Versetzter Bereich
- 63: Text
- 64: Bildstruktur
- a-e: Projektionslinien
- A-A: Schnittlinie

## Patentansprüche

1. Transportbehälter (1), insbesondere Flaschenkasten zur Aufnahme von Getränkeflaschen oder Flaschengebinden,
- wobei der Transportbehälter (1) einen Boden und eine Behälterwand umfasst, die Behälterwand eine Außenwandfläche (3,4) und eine Innenwandfläche (5,6) aufweist wobei der Boden und die Innenwandfläche einen Aufnahmeraum (2) des Transportbehälters definieren und
- wobei die Außenwandfläche (3,4) zumindest teilweise mit einem Etikett (20) bedeckt ist und
- wobei das Etikett in einem Etikettenbereich (10) an der Außenwand (3) angebracht ist und
- wobei der Etikettenbereich (10) Textelemente (12, 13) aufweist und
wobei das Etikett (20) mindestens eine gegenüber einem unbedeckten Abschnitt der Außenwandfläche versetzte Struktur (11) aufweist und mindestens eine versetzte Struktur (11) des Etiketts (20) in die Ebene der unbedeckten Außenwand hineinragt,
**dadurch gekennzeichnet, dass**
- das Etikett (20) zum Schutz des bedruckten Bereichs gegen Beschädigungen als kaschiertes oder laminiertes Folienetikett ausgebildet ist und das Folienetikett insgesamt in die Ebene der Außenwand hineinversetzt und ein Text (12) gegenüber der Fläche des Etikettenbereichs wiederum erhaben ist, und ein Text (13) gegenüber der Fläche des Etikettenbereichs (10) weiter in die Ebene der Außenwandfläche hineinragend ausgebildet ist, und die gesamte Fläche des Etikettenbereichs (10) vorliegend um einen Versatz(14) in die Ebene der Außenwand hinein ausgebildet ist.

2. Transportbehälter nach Anspruch 1, **dadurch gekennzeichnet, dass** die Struktur (11) zumindest teilweise entlang von Drucklinien auf dem Etikett, (20) insbesondere als Buchstaben oder entlang von Symbolkanten verläuft, vorzugsweise einen grafischen Werbeschriftzug umfasst.

3. Transportbehälter nach Anspruch 1 oder 2, **dadurch gekennzeichnet, dass** die Struktur (11) flächenartige Bestandteile aufweist, welche insbesondere natürlichen und/oder industriellen Oberflächenstrukturen nachempfunden sind.

4. Transportbehälter nach einem der oben genannten Ansprüche, **dadurch gekennzeichnet, dass** das Etikett (20) aus einer Folie, insbesondere einer PE-, PP- oder PET-Folie besteht oder PE-, PP- oder PET-Bestandteile umfasst bzw. aus PE-, PP- oder PET-Kombinationen besteht und damit überzogen und/oder mit einer Schutzlackschicht und/oder eine Schutzfolie überzogen ist.

5. Transportbehälter nach einem der oben genannten Ansprüche, **dadurch gekennzeichnet, dass** die Struktur (11) eine Versatzhöhe von maximal 2 mm, insbesondere maximal 1 mm vorzugsweise von maximal 0,5 mm aufweist.

6. Transportbehälter nach einem der oben genannten Ansprüche, **dadurch gekennzeichnet, dass** das Etikett (20) eine Shore Härte von mindestens 60 aufweist.

7. Transportbehälter nach einem der oben genannten Ansprüche, **dadurch gekennzeichnet, dass** die Struktur (11) des Etiketts (20) zumindest Abschnittsweise einen rauen mattierten optischen Eindruck aufweist und/oder zumindest Abschnittsweise einen glatten glänzenden optischen Eindruck aufweist.

8. Transportbehälter nach einem der oben genannten Ansprüche, **dadurch gekennzeichnet, dass** die Struktur (11) zumindest einen Eckbereich (61) der Behälterwand des Flaschenkastens zumindest teilweise überdeckt bzw. das Etikett darübergehend verläuft.

## Claims

1. Transport container (1), in particular bottle crate for holding bottles or bottle packs,
- whereby the transport container (1) comprises a base and a container wall, whereby the container wall has an outer wall surface (3, 4) and an inner wall surface (5, 6), and whereby the base and the inner wall surface define a reception volume (2) of the transport container, and
- whereby the outer wall surface (3, 4) is at least partially covered with a label (20), and
- whereby the label is attached in a label area (10) on the outer wall (3), and
- whereby the label portion (10) has text elements (12, 13), and
- whereby the label (20) has at least a structure (11) offset over an uncovered portion of the outer wall surface, and where at least an offset structure (11) of the label (20) protrudes in the plane of the uncovered outer wall,
**characterised in that**
- the label (20) to protect the printed area against damage is designed as a veneered or laminated foil label, and the foil label projects totally into the plane of the outer wall, and a text (12), relative to the surface of the label area, is in turn raised, and a text (13) is designed to protrude further into the plane of the outer wall surface relative to the surface of the label area (10), and the entire surface of the label area (10) in the present case is formed with an offset (14) into the plane of the outer wall.

2. Transport container according to claim 1, **characterised in that** the structure (11) extends at least partially along from print lines to the label (20), in particular as characters, or along symbol edges, preferably comprising graphical advertising lettering.

3. Transport container according to claim 1 or 2, **characterised in that** the structure (11) comprises sheet-like components, which, in particular are designed as natural and/or industrial surface structures.

4. Transport container according to one of the above claims, **characterised in that** the label (20) consists of a foil, in particular a PE, PP or PET foil, or comprising PE, PP or PET constituents, or PE, PP or PET combinations, and is coated with the same and/or is coated with a protective varnish layer and/or a protective sheet.

5. Transport container according to one of the above claims, **characterised in that** the structure (11) has a maximum height offset of 2 mm, in particular a maximum of 1 mm, preferably a maximum of 0.5 mm.

6. Transport container according to one of the above claims, **characterised in that** the label (20) has a Shore hardness of at least 60.

7. Transport container according to one of the above claims, **characterised in that** the structure (11) of the label (20) has at least sections with a rough matt visual appearance and/or at least sections with a smooth shiny visual appearance.

8. Transport container according to one of the above claims, **characterised in that** the structure (11) at least partially covers at least one corner area (61) of the container wall of the bottle crate, or the label extends above it.

## Revendications

1. Récipient de transport (1), plus particulièrement une caisse de bouteilles pour le logement de bouteilles de boisson ou des emballages de bouteilles,
- le récipient de transport (1) comprenant un fond et une paroi de récipient, la paroi de récipient comprenant une surface de paroi extérieure (3, 4) et une surface de paroi intérieure (5, 6), le fond et la surface de paroi intérieure délimitant un espace de logement (2) du récipient de transport et
- la surface de paroi extérieure (3, 4) étant recouverte au moins partiellement d'une étiquette (20) et
- l'étiquette étant apposée dans une zone d'étiquette (10) sur la paroi extérieure (3) et
- la zone d'étiquette (10) comprenant des éléments de texte (12, 13) et l'étiquette (20) comprenant au moins une structure (11) décalée par rapport à une portion non recouverte de la surface de paroi extérieure et au moins une structure décalée (11) de l'étiquette (20) dépasse sur le plan de la paroi extérieure non recouverte,
**caractérisé en ce que**
- l'étiquette (20) est conçue, pour la protection de la zone imprimée contre des endommagements, comme une étiquette en film contrecollé et stratifié et l'étiquette en film est décalée globalement dans le plan de la paroi extérieure et un texte (12) est en relief par rapport à la surface de la zone d'étiquette, et un texte (13) est conçu pour dépasser davantage dans le plan de la surface de la paroi extérieure par rapport à la surface de la zone d'étiquette (10), et l'ensemble de la surface de la zone d'étiquette (10) est formé dans le cas présent autour d'un décalage (14) dans le plan de la paroi extérieure.

2. Récipient de transport selon la revendication 1, **caractérisé en ce que** la structure (11) s'étend au moins partiellement le long de lignes d'impression sur l'étiquette (20), plus particulièrement sous la forme de lettres, ou le long de bords de symboles, de préférence comprend une inscription publicitaire graphique.

3. Récipient de transport selon la revendication 1 ou 2, **caractérisé en ce que** la structure (11) comprend des composants aplatis qui sont inspirés de structures de surfaces naturelles et/ou industrielles.

4. Récipient de transport selon l'une des revendications précédentes, **caractérisé en ce que** l'étiquette (20) est constituée d'un film, plus particulièrement d'un film de PE, PP ou PET ou comprend des composants en PE, PP ou PET ou est constitué de combinaisons de PE, PP ou PET et en est recouvert et/ou est recouvert d'une couche de vernis protecteur et/ou d'un film protecteur.

5. Récipient de transport selon l'une des revendications précédentes, **caractérisé en ce que** la structure (11) présente une hauteur de décalage de 2 mm maximum, plus particulièrement de 1 mm maximum, de préférence de 0,5 mm maximum.

6. Récipient de transport selon l'une des revendications précédentes, **caractérisé en ce que** l'étiquette (20) présente une dureté Shore d'au moins 60.

7. Récipient de transport selon l'une des revendications précédentes, **caractérisé en ce que** la structure (11) de l'étiquette (20) présente, au moins partiellement, un aspect optique rugueux mat et/ou au moins partiellement un aspect optique lisse brillant.

8. Récipient de transport selon l'une des revendications précédentes, **caractérisé en ce que** la structure (11) recouvre au moins partiellement au moins un angle (61) de la paroi du récipient de la caisse de bouteilles ou s'étend par-dessus l'étiquette.
